# EUROPEAN PATENT SPECIFICATION

(11) **EP 4 015 249 B1**
(45) Date of publication and mention of the grant of the patent: **15.11.2023**
(21) Application number: 21212243.6
(22) Date of filing: 03.12.2021
(51) Int. Cl.: B60C 11/16

(54) **WINTER TIRE WITH STUDS**
WINTERREIFEN MIT SPIKES
PNEU HIVER AVEC CRAMPONS

(30) Priority: 16.12.2020 US 202063126118 P
(43) Date of publication of application: 22.06.2022
(73) Proprietor: The Goodyear Tire & Rubber Company, Akron, OH 44316 (US)
(72) Inventor: PONS, Frederic Michel-Jean, F-57100 Thionville (FR)
(74) Representative: Kutsch, Bernd

(56) References cited:
- EP-A1- 1 637 358
- JP-A- S61 191 404
- JP-A- 2013 091 405
- JP-U- H0 452 909

## Description

### Field of the Invention

This invention relates to a tire, and in particular to a tire that can be used as a winter tire and that comprises studs installed in its tread.

### Background of the Invention

Winter tires may be equipped with studs installed in the tread portion of the tire to allow the tire to grip an icy or snowy road surface. Such studs are usually at least partially embedded into a stud installation hole provided in the tread of the tire. The stud may broaden a pin bore and be tightly embedded therein so that the stud does not fall out of the stud installation hole due to braking or driving, or due to lateral and vertical forces received from the road surface while the tire is rotating.

The stud may have a body and a stud pin with a tip end protruding out of the body. The body may be fitted into a blind hole formed in the tread of the tire and thereby be secured to the tread surface. The tip end is the portion of the stud pin that protrudes radially outward from the body. The body may be asymmetrically and/or irregularly shaped as it extends radially outward from the tread.

Also, when these studded snow tires are used on concrete or asphalt road surfaces not covered by snow or ice, these harder, bare road surfaces may dislodge the studs. Even for tires equipped with the above-mentioned studs, there are cases where the studs often fall out (pin drop) due to the forces applied to the tire while a vehicle is driving, braking, and/or steering on a concrete or asphalt road. Therefore, good care is to be taken to avoid pin drop for these pneumatic stud tires, as well as, to keep the other performance characteristics of the studs (e.g., traction, durability, wear, etc.).

At the same time, there is a constant need for improvement of the gripping performance of the tire on ice either during braking and/or accelerating and of for improvement of the transversal grip of the tire.

EP1637358 A1 and JP2013091405A disclose tires in accordance with the preamble of claim 1.

### Summary of the Invention

The invention relates to a tire in accordance with claim 1.

Dependent claims refer to preferred embodiments of the invention.

In a preferred aspect of the invention, at least a part of the studs extends longitudinally into the tread in a direction inclined relative to the normal of the outer surface of the tread thereby forming inclined studs. The invention provides for distribution and/or orientation of the inclined studs on a tread to allow improving the performance of the tire on ice.

In the present description, "studs" refers to both inclined studs, i. e. to studs that extend longitudinally or along their longitudinal axis into the tread in a direction inclined relative to the normal of the radially outer surface of the tread, and to studs that extend longitudinally or along their longitudinal axis into the tread in a direction parallel to the normal of the radially outer surface of the tread unless specified otherwise.

The tire can be a pneumatic tire or a non-pneumatic tire. Preferably, it is a pneumatic tire.

In a preferred aspect of the invention, the stud pins of the first plurality of studs, or the second plurality of studs or the third plurality of the studs or any combination of those are made of tungsten carbide.

In a preferred aspect of the invention, the first plurality of studs, the second plurality of studs, and the third plurality of studs each have a body with identical construction.

In a preferred aspect of the invention, it is preferred that when one or more of the first plurality of studs, the second plurality of studs, and the third plurality of studs are inclined, the one or more studs are fixedly arranged in order to form an angle relative to the orientation normal to the surface of the tire tread.

In a preferred aspect of the invention, the first angle α opens from the normal of the radially outer surface of the tread 1 in a direction of rotation of the tire.

In another preferred aspect of the invention, the first angle α opens from the normal of the radially outer surface of the tread in a direction that is opposite to the direction of rotation of the tire.

In yet a further preferred aspect of the invention, the studs that are inclined in the circumferential direction under the first angle α are divided up in a first group in which the first angle α opens from the normal of the radially outer surface of the tread in the direction of rotation of the tire and in a second group in which the first angle α opens from the normal of the radially outer surface of the tread in a direction that is opposite to the direction of rotation of the tire.

### As regards the different inclination of the inclined studs

In a preferred aspect of the invention, at least a part of the third plurality of the studs extends longitudinally into the tread in a direction inclined relative to the normal of the outer surface of the tread by a first angle α in the circumferential direction of the tire, and at least a part of the first and second plurality of studs extends longitudinally into the tread in a direction inclined relative to the normal of the outer surface of the tread in a direction being different than the third plurality of the studs, and one or more of the following is true:
the inclined studs of the first plurality of studs and second plurality of studs are inclined in the circumferential direction according to a first angle α that is different from the first angle α of the inclined studs of the third plurality of studs;
the inclined studs of the first plurality of studs and second plurality of studs are inclined in the circumferential direction according to a first angle α that opens in a direction relative to the direction of rotation of the tire that is different than the inclined studs of the third plurality of studs;
the inclined studs of the first plurality of studs and second plurality of studs are inclined in the width direction of the tire and the inclined studs of the third plurality of studs are inclined in the circumferential direction of the tire.

### As regards the inclination of the studs in the circumferential direction of the tire

In a preferred aspect of the invention, at least a part of the third plurality of the studs extends longitudinally into the tread in a direction inclined relative to the normal of the outer surface of the tread by a first angle α in the circumferential direction of the tire. For example, at least a part of the third plurality of the studs extends longitudinally into the tread in a direction inclined relative to the normal of the outer surface of the tread by a first angle α in the circumferential direction of the tire, wherein the first angle α (or the angle α) in the tire circumferential direction is ranging from 5° to 40° or from 10° to 40; preferably from 15° to 35°.

In a preferred aspect of the invention, at least a part of the first plurality of studs or at least a part of the second plurality of studs or a combination of those extends longitudinally into the tread in a direction inclined by the first angle α in the tire circumferential direction.

In a preferred aspect of the invention, at least a part of the first plurality of studs and/or at least a part of the second plurality of studs extends longitudinally into the tread in a direction inclined by the first angle α in the tire circumferential direction, wherein the first angle α in the tire circumferential direction is ranging from 5°to 40° or from 10° to 40°; preferably from 15° to 35°.

In a preferred aspect of the invention, the tire shows a marking indicative of the direction of rotation of the tire, and the first angle α opens from the normal of the outer surface of the tread in the direction of rotation of the tire. For example, the tire shows a marking indicative of the direction of rotation of the tire, and the first angle α opens from the normal of the outer surface of the tread in a direction that is reverse to the direction of rotation of the tire.

In a preferred aspect of the invention, the tire shows a marking indicative of the direction of rotation of the tire, and the studs that are inclined in the circumferential direction according to a first angle α are distributed in a first group wherein the first angle α opens from the normal of the outer surface of the tread in the direction of rotation of the tire and a second group wherein the first angle α opens from the normal of the outer surface of the tread in a direction that is reverse to the direction of rotation of the tire.

### As regards the inclination of the studs in the width direction of the tire

In a preferred aspect of the invention, at least a part of the first plurality of studs or at least a part of the second plurality of studs or a combination of those extends longitudinally into the tread in a direction inclined by a second angle β (or an angle β) in the tire width direction.

In a preferred aspect of the invention, at least a part of the first plurality of studs or at least a part of the second plurality of studs or a combination of those extends longitudinally into the tread in a direction inclined by a second angle β in the tire width direction, wherein the second angle β in the tire width direction is ranging from 5° to 40° or from 10° to 40°; preferably from 15° to 35°.

### As regards the inclination of the studs in the circumferential direction and the width direction of the tire

In a preferred aspect of the invention, at least a part of the first plurality of studs, or at least a part of the second plurality of studs, or a combination of those extends longitudinally into the tread in a direction inclined by a second angle β in the tire width direction, wherein the first angle α in the tire circumferential direction is ranging from 5° to 40° or from 10° to 40° degrees, preferably from 15° to 35°. For example, at least a part of the first plurality of studs, or at least a part of the second plurality of studs, or a combination of those, extends longitudinally into the tread in a direction inclined by a second angle β (or an angle β) in the tire width direction, wherein both the first angle α in the tire circumferential direction and the second angle β in the tire width direction are ranging from 5 to 40 degrees or from 10° to 40°; preferably from 15° to 35°.

### As regards the orientation of the studs

The tip ends of the studs of at least one region have an arrowhead shape or an elongated shape, and the at least one region is preferably selected from the central region, the first shoulder region and the second shoulder region. For example, the tip ends of the studs of the central region, the first shoulder region and the second shoulder region have an arrowhead shape; and at least a part of the arrowheads of the studs of the first shoulder region and/or the second shoulder region are pointing in a direction different from the direction of the arrowheads of the studs of the central region.

In a preferred aspect of the invention, the bottom portion has a tear-drop shape comprising three planar sides and one semi-cylindrical side, or a shape selected from a triangular shape, a quadrangular shape, a pentagonal shape, or a hexagonal shape. For example, the third plurality of studs each has a first orientation, the first plurality of studs each has a second orientation rotated relative to the first orientation from +30° to +90° along their longitudinal direction, and the second plurality of studs each has a third orientation rotated relative to the first orientation from -30° to -90° along their longitudinal direction.

In a preferred aspect of the invention, the body comprises a bottom portion and the bottom portion has a tear-drop shape comprising three planar sides and one semi-cylindrical side, or a shape selected from a triangular shape, a quadrangular shape, a pentagonal shape, or a hexagonal shape. For example, the tip ends of the stud pins of the first shoulder region and the second shoulder region have an elongated shape being an arrowhead shape; and at least a part of the arrowheads of the stud pins of the first shoulder region is pointing in a direction different from at least a part of the arrowheads of the stud pins of the second shoulder region.

In a preferred aspect of the invention, the first shoulder region and the second shoulder region show studs having a tip end with an arrowhead shape or an elongated shape, and a body with a bottom region of a tear-drop shape comprising three planar sides and one semi-cylindrical side, or a bottom region with a shape selected from a triangular shape, a quadrangular shape, a pentagonal shape, or a hexagonal shape.

### Definitions

"Asymmetric tread" means a tread that has a tread pattern not symmetrical about the center plane or the equatorial plane of the tire.

"Symmetric tread" means a tread that has a tread pattern symmetrical about the center plane or the equatorial plane of the tire.

"Circumferential" means lines or direction extending along the perimeter of the surface of the annular tread perpendicular to the axial direction.

"Axial" means lines or directions that are parallel to the axis of rotation of the tire.

"Groove" means an elongated void area in a tread that can extend circumferentially or laterally about the tread in a straight, curved, or zigzag manner. Circumferentially and laterally extending grooves sometimes have common portions.

"Tread element" or "traction element" means a rib or a block element defined by having a shape adjacent groove.

"Lateral edge" means a line tangent to the laterally outermost or innermost tread contact footprint as measured under normal load and tire inflation, the line being parallel to the equatorial center plane.

"Equatorial center plane" means the plane perpendicular to the tire axis of rotation and passing through the center of the tread.

"Directional Tread Pattern" means a tread pattern designed for a specific direction of rotation.

### Brief Description of the Drawings

Figure 1 shows a top view onto a tread according to an embodiment of the invention.
Figure 2 shows a partial cross-sectional view of a tire according to the invention.
Figure 3 shows a partial cross-sectional view in the width direction of a tire according to the invention.
Figure 4 is an example stud that can be used in the tire according to the invention.
Figure 5 is an alternative example stud that can be used in the tire according to the invention.
Figure 6 is a further alternative example stud that can be used in the tire according to the invention.

### Detailed Description of Preferred Embodiments of the Invention

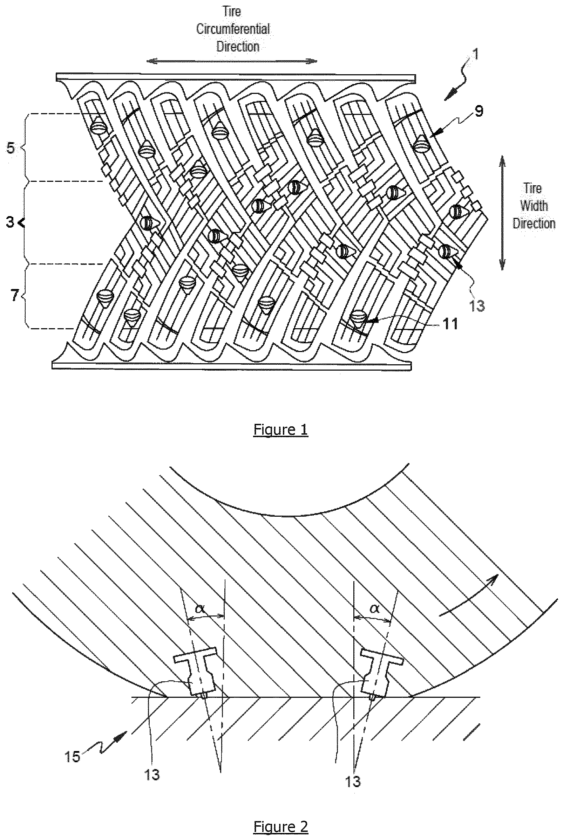

The following is an explanation of a pneumatic or non-pneumatic tire according to the invention. Reference is made to Figure 1 showing the tread 1 of a tire with studs 9, 11, 13 that are at least partially embedded in the said tread 1.

The tire circumferential direction explained hereafter refers to the rotation direction (both rolling directions) of a tread surface of a studded tire about a tire rotation axis. The radial direction of the tire refers to a direction radiating about a direction extending orthogonally to/from the tire rotation axis. The outer side in the radial direction of the studded tire refers to the side away from the tire rotation axis in the radial direction of the studded tire. The tire width direction is a direction parallel to the tire rotational axis, and the outer side in the tire width direction refers to a direction axially away from a tire center line or equatorial plane of the studded tire.

A studded tire according to the present invention may include a carcass ply layer, a belt layer, and bead cores, which serve as a frame for the studded tire. The studded tire may further include sidewall members, bead filler members, rim cushion members, and an innerliner member, around the frame for the studded tire.

The carcass ply layer may be formed in a toroidal shape wound between a pair of circular ring-shaped bead cores and may include rubber-coated organic fiber carcass ply members. The carcass ply layer may be configured from multiple carcass ply members or a single carcass ply member. The belt layer may be provided on the outer side in the tire radial direction of the carcass ply layer, configured in two layers of belt members. The belt layer may be constructed of rubber-coated steel cords arranged at a predetermined angle, such as 20° to 30°, relative to the tire circumferential direction. The inclination direction of the steel cords of the two layers of the belt members may be opposite to each other. The tread is preferably disposed on an outer side in the tire radial direction of the belt layer. The sidewall members may be connected to two sides of the tread to form two sidewalls. The tread may be configured from two or more layers of rubber, an upper tread disposed on an outer side in the tire radial direction and a lower tread disposed on an inner side in the tire radial direction. The rim cushion members may be disposed at inner sides in the tire radial direction of the sidewall members and come into contact with a rim on which the studded tire may be fitted. A bead filler material may be disposed between a portion of the carcass ply layer before the carcass ply layer is wound around the bead cores and a portion of the carcass ply layer. The innerliner member may be disposed on an inner surface of the studded tire adjacent a tire cavity region that is filled with gas enclosed by the studded tire and the rim. The studded tire may have this tire structure or any other suitable structure, pneumatic and/or non-pneumatic.

The tread shows a tread pattern on its external surface that can be symmetric or asymmetric.

For example, the tire has an asymmetric tread pattern.

In the embodiment shown in Figure 1, the tread 1 has a directional tread pattern and the tire comprises a marking indicative of the direction of rotation of the tire.

The tread 1 shows a directional tread pattern or not, the tread 1 of the tire according to the disclosure is divided in the tire width direction between a central region 3 placed between a first shoulder region 5 and a second shoulder region 7. It is preferred that studs are installed in each of the three regions. The tire will therefore comprise a first plurality of studs 9 installed in the first shoulder region 5 and a second plurality of studs 11 installed in the second shoulder region 7 and a third plurality of studs 13 installed in the central region 3. In an embodiment, all the studs of the tire have an identical construction but can be installed differently in the tread.

In an embodiment, a part of the studs is installed in the tread to extend longitudinally in a direction being the normal of the outer surface of the tread whereas another part of the studs is installed in the tread to extend longitudinally in a direction that is inclined by comparison to the normal of the outer surface of the tread, the latter forming a plurality of inclined studs.

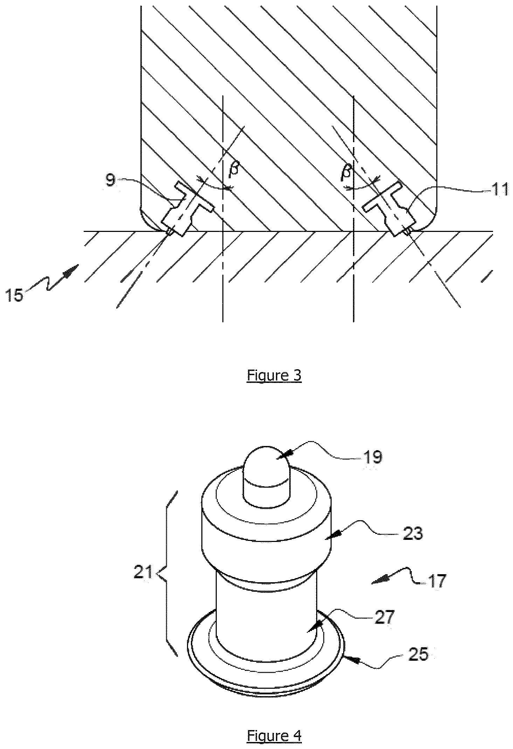

Reference is now made to Figures 2 and 3, where it can be seen that the inclined studs 9, 11, 13 are inclined relative to the surface of the road 15 on the part that is in contact with the surface of the road 15. Studs extending in a direction being the normal of the outer surface of the tread are perpendicular to the surface of the road on the part that is in contact with the surface of the road (not shown in Fig. 2 and 3).

The inclined studs of one or more of the first plurality of studs 9, the second plurality of studs 11 or the third plurality of studs 13 can extend longitudinally in a direction inclined by a first angle α in the tire circumferential direction and/or to a direction inclined by a second angle β in the tire width direction.

In one embodiment, at least a part of the first plurality of studs 9 and/or at least a part of the second plurality of studs 11 extend longitudinally into the tread in a direction inclined by the first angle α in the tire circumferential direction. The first angle α (or the angle α) may range from 5° to 40° or from 10° to 40°; preferably from 15° to 35° degrees; more preferably from 20° to 30°.

In one embodiment, at least a part of the third plurality of the studs 13 extends longitudinally into the tread in a direction inclined relative to the normal of the outer surface of the tread by a first angle α in the circumferential direction of the tire. The first angle α may range from 5° to 40° or from 10° to 40; preferably from 15° to 35°; more preferably from 20° to 30°.

The inclination of at least a part of the studs 9, 11, 13 in the circumferential direction of the tire improves the grip properties of the tire. For example, the tire shows a marking indicative of the direction of rotation of the tire; and the first angle α opens from the normal of the outer surface of the tread in the direction of rotation of the tire. This may allow for increased grip during acceleration. For example, the tire shows a marking indicative of the direction of rotation of the tire; and the first angle α opens from the normal of the outer surface of the tread in a direction that is reverse to the direction of rotation of the tire. This may improve the braking performances of the tire.

As illustrated in Figure 2, a mix can be made so that the tire shows a marking indicative of the direction of rotation of the tire (indicated by an arrow), and the studs 9, 11, 13 that are inclined in the circumferential direction according to a first angle α are distributed in a first group wherein the first angle α opens from the normal of the outer surface of the tread in the direction of rotation of the tire and a second group wherein the first angle α opens from the normal of the outer surface of the tread in a direction that is reverse to the direction of rotation of the tire. For example, each of the first plurality of studs 9, the second plurality of studs 11 and the third plurality of the studs 13 can comprise studs that are inclined in the circumferential direction of both the first and the second group. For example, the first plurality of studs 9 and the second plurality of studs 11 comprises studs that are inclined in the circumferential direction and belong to the first group and the third plurality of studs 13 comprises studs that are inclined in the circumferential direction and belong to the second group. For example, the first plurality of studs 9 and the second plurality of studs 11 comprises studs that are inclined in the circumferential direction and belong to the second group and the third plurality of studs 13 comprises studs that are inclined in the circumferential direction and belong to the first group.

In a preferred embodiment, at least 30 % of the first plurality of studs 9 and/or of the second plurality of studs 11 are inclined in the tire circumferential direction, more preferably at least 50% or at least 80%. For example, all the studs of the first plurality of studs 9 and/or all the studs of the second plurality of studs 11 are inclined in the tire circumferential direction.

In a preferred embodiment, at least 30 % of the third plurality of studs 13 are inclined in the tire circumferential direction, more preferably at least 50% or at least 80%. For example, all the studs of the third plurality of studs 13 are inclined in the tire circumferential direction.

In a preferred embodiment and as illustrated in Figure 3, at least a part of the first plurality of studs 9 and/or at least a part of the second plurality of studs 11 extends longitudinally in a direction inclined by a second angle β in the tire width direction.

The second angle β (or the angle β) preferably ranges from 5° to 40° or from 10° to 40°; more preferably from 15° to 35° or from 20° to 30°.

In a preferred embodiment, the second angle β is an acute angle that is preferably opened to the outer side in the tire width direction. This allows for improving the transversal grip of the tire.

In a preferred embodiment, the studs inclined in the tire width direction may be inclined in direction of the outer side in the tire width direction. In other words, each of the studs includes a body and a stud pin with a tip end protruding out of the body, wherein the body includes a bottom portion located at the opposite end of the tip end, the bottom portion is closer to the tire center line of the studded tire than the tip end. As a result, the inclination direction of the studs of the two shoulder regions may be opposite to each other.

In a preferred embodiment, at least 30 % of the first plurality of studs 9 and/or of the second plurality of studs 11 are inclined in the tire width direction, more preferably at least 50% or at least 80%.

For example, all the studs of the first plurality of studs 9 and/or all the studs of the second plurality of studs 11 are inclined in the tire width direction. In an embodiment, at least a part of the first plurality of studs 9 and/or at least a part of the second plurality of studs 11 extends longitudinally in a direction inclined by a first angle α in the tire circumferential direction.

The first angle α preferably ranges from 5° to 40° or from 10° to 40°, more preferably from 15° to 35° or from 20° to 30°.

The first angle α used for the inclination of the first plurality of studs 9 and/or of the second plurality of studs 11 may be the same or different from the first angle α used for the inclination of the third plurality of studs 13. While it is preferred that the third plurality of the studs 13 extend longitudinally into the tread in a direction inclined relative to the normal of the outer surface of the tread by a first angle α in the circumferential direction of the tire, the first plurality of studs 9 and second plurality of studs 11 can be inclined either in the circumferential direction and/or in the width direction. For example, inclined studs of the first plurality of studs 9 and second plurality 11 of studs are inclined in the circumferential direction whereas a second part of the inclined studs is inclined in the width direction. For example, the inclined studs of the first plurality of inclined studs and second plurality of inclined studs are inclined in both the circumferential direction and the width direction.

In a preferred embodiment, at least a part of the third plurality of the studs 13 extends longitudinally into the tread in a direction inclined relative to the normal of the outer surface of the tread by a first angle α in the circumferential direction of the tire;, and at least a part of the first plurality of studs 9 and second plurality of studs 11 extends longitudinally into the tread in a direction inclined relative to the normal of the outer surface of the tread in a direction being the same or different than the third plurality of the studs 13, preferably in a direction different than the third plurality of the studs 13.

In a preferred embodiment, at least a part of the third plurality of the studs 13 extends longitudinally into the tread in a direction inclined relative to the normal of the outer surface of the tread by a first angle α in the circumferential direction of the tire, and at least a part of the first plurality of studs 9 and second plurality of studs 11 extends longitudinally into the tread in a direction inclined relative to the normal of the outer surface of the tread in a direction being different than the third plurality of the studs 13, wherein:
the inclined studs of the first plurality of studs 9 and second plurality of studs 11 are inclined in the circumferential direction according to a first angle α that is different from the first angle α of the inclined studs of the third plurality of studs 13; and/or
the inclined studs of the first plurality of studs 9 and second plurality of studs 11 are inclined in the circumferential direction according to a first angle α that opens in a direction relative to the direction of rotation of the tire that is different than the inclined studs of the third plurality of studs 13; and/or
the inclined studs of the first plurality of studs 9 and second plurality of studs 11 are inclined in the width direction of the tire and the inclined studs of the third plurality of studs 13 are inclined in the circumferential direction of the tire.

The fact that inclined studs of the first plurality of studs 9 and second plurality of studs 11 are inclined in the circumferential direction according to a first angle α that is different from the first angle α of the inclined studs of the third plurality of studs 13 means that the inclined studs of the first plurality of studs 9 and second plurality of studs 11 are inclined in the circumferential direction according to a first angle α that is greater than the first angle α of the inclined studs of the third plurality of studs 13, or that the inclined studs of the first plurality of studs 9 and second plurality of studs 11 are inclined in the circumferential direction according to a first angle α that is smaller than the first angle α of the inclined studs of the third plurality of studs 13.

The fact that inclined studs of the first plurality of studs 9 and second plurality of studs 11 are inclined in the circumferential direction according to a first angle α that opens in a direction relative to the direction of rotation of the tire that is different than the inclined studs of the third plurality of studs 13 means that the inclined studs of the first plurality of studs 9 and second plurality of studs 11 are inclined in the circumferential direction according to a first angle α that opens from the normal of the outer surface of the tread in the direction of rotation of the tire whereas the inclined studs of the third plurality of studs 13 are inclined in the circumferential direction according to a first angle α that opens in a direction that is reverse to the direction of rotation of the tire; or that the inclined studs of the first plurality of studs 9 and second plurality of studs 11 are inclined in the circumferential direction according to a first angle α that opens from the normal of the outer surface of the tread in the reverse direction of rotation of the tire whereas the inclined studs of the third plurality of studs 13 are inclined in the circumferential direction according to a first angle α that opens in the direction of rotation of the tire.

A further improvement may be obtained by the use of studs 9, 11, 13 with oriented and/or elongated tip ends wherein the studs 9, 11, 13 can have a different orientation in a single tread. Indeed, the studs 9, 11, 13 can be of any construction but are preferably with an elongated tip end and/or with a bottom portion that prevents the rotation of the body within the tread so that the tip ends can be oriented. For example, the studs 9, 11, 13 include a body and a stud pin with a tip end protruding out of the body, for partially inserting into corresponding recesses in the tread. The body is at least partially embedded inside a stud installation hole in the tread of the tire in which it is installed. The stud is secured to the tire by side surfaces of the stud installation hole pressing and clamping onto part of the body. The body may include a stump portion, a bottom portion and a shank portion interconnecting the bottom portion and the stump portion. For example, the shank portion has a thinner cross-section compared to the bottom portion and/or to the stump portion.

The bottom portion is located at the opposite end of the stump portion and the tip end. The body is preferably formed from the bottom portion, the shank portion, and the stump portion in ascending order. The longitudinal direction of the stud extends longitudinally from the bottom portion to the tip end.

When the stud is installed in the tread, the pin end or tip end is the portion of the stud pin that protrudes from the tread surface, contacts the road surface, and claws into ice and/or snow.

The stud pin and the body may be constructed of the same metallic material or from different metallic materials. For example, the stud pin and the body may be made from aluminum or steel. The stud pin may be made from tungsten carbide and the body may be made from aluminum. If the stud pin and the body are made from different metallic materials, the stud pin may be fixed to the body by pushing and interference fitting a projection of the stud pin into a hole of the stump portion of the body.

Figures 4 to 6 show an external perspective of studs that can be used in the context of the present invention for any of the first plurality of studs 9, the second plurality of studs 11 and/or the third plurality of studs 13.

For example, the studs can be axially symmetric along an axis extending along the length of the stud. An example of a symmetrical stud is described in US2011/0088822 and US2012/0227880.

Figure 4 illustrates such a symmetrical stud 17 that includes a body 21 and a stud pin with a tip end 19 protruding out of the body 21 for partially inserting into corresponding recesses in the tread. The body 21 includes a stump portion 23, a bottom portion 25, and a shank portion 27 interconnecting the bottom portion and the stump portion. In an embodiment not illustrated, the tip end has a hexagonal cross-section at least in some section. For example, the tip end is flat. For example, the tip end 19 is rounded or pointed. For example, the studs can be axially asymmetric along an axis extending along the length of the stud. An example of an asymmetrical stud is described in US2013/0000807.

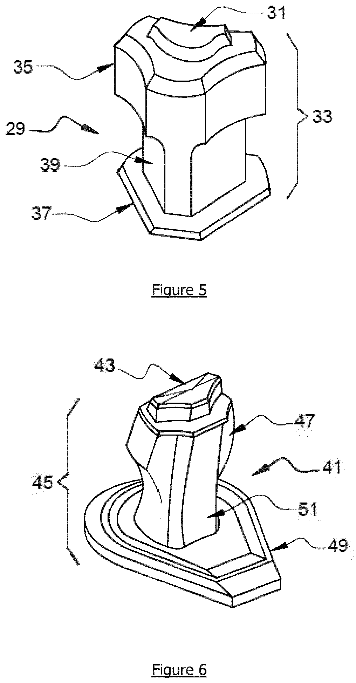

Figure 5 illustrates such an asymmetrical stud 29 that includes a body 33 and a stud pin with a tip end 31 protruding out of the body 33. The body 33 may include a stump portion 35, a bottom portion 37, and a shank portion 39 interconnecting the bottom portion and the stump portion. For example, the location of the center of gravity of the stump portion 35 or of the tip end 31 of the stud 29 is laterally offset from the center of gravity of the bottom portion 37; or the location of the center of gravity of the tip end 31 is laterally offset from the center of gravity of the stump portion 35, or the location of the center of gravity of the shank portion 39 is laterally offset from the center of gravity of the bottom portion 37.

For example, the studs can have a bottom portion having a tear-drop shape as disclosed in US2020/0122520 or US2020/0189325. Figure 6 shows such a stud 41 that includes a body 45 and a stud pin with a tip end 43 protruding out of the body 45 for partially inserting into corresponding recesses in the tread. The body 45 may include a stump portion 47, a bottom portion 49, and a shank portion 51 interconnecting the bottom portion and the stump portion. The tip end 43 may have a hexagonal-like shape extending outward from an outermost surface of the stump portion 47 of the body 45. The cross-section of the bottom portion 49 may alternatively be a substantially triangular, quadrangular, pentagonal, or hexagonal shape.

It is also possible that the bottom portion of the body has a "saucer" configuration such that an inclined surface extends radially inward from vertical sides of the bottom portion away from the tip end such that the inclined surface takes on the tear-drop shape or substantially triangular, quadrangular, pentagonal, or hexagonal shape of the bottom portion.

Generally, the bottom portion 49 may be inserted into a corresponding similarly shaped stud installation hole in the tread of the tire thereby securing the orientation of the stud 41 and preventing rotation of the stud during use. Alternatively, the stud installation hole may be circular or other suitable shape allowing the bottom portion 49 to be secured against rotation.

Each of the studs comprising a body and a stud pin with a tip end protruding out of the body. The tip ends of the studs of at least one region may have an arrowhead shape or an elongated shape, the at least one region being selected from the central region 3, the first shoulder region 5 and the second shoulder region 7. The tip ends of the studs of the central region 3 have therefor a given orientation that can be the same or different from the tip ends of the studs of the first shoulder region 5 and/or the second shoulder region 7. The orientation of the tip ends of the first shoulder region 5 can be the same or different from the orientation of the tip ends of the second shoulder region 7. For example, as shown in figure 1, wherein the third plurality of studs 13 each having a first orientation, the first plurality of studs 9 each having a second orientation rotated relative to the first orientation from +30° to +90° along their longitudinal direction, preferably from +45° to +90°; and the second plurality of studs 11 each having a third orientation rotated relative to the first orientation from -30° to -90° along their longitudinal direction, preferably from -45° to - 90°.

In a preferred embodiment, the tip ends of the studs of the central region 3, the first shoulder region 5 and the second shoulder region 7 have an arrowhead shape, and all the arrowheads are pointing to the same direction. In an embodiment, the tip ends of the studs of the central region 3, the first shoulder region 5 and the second shoulder region 7 have an arrowhead shape; and at least a part of the arrowheads of the studs of the first shoulder region 5 and/or the second shoulder region 7 are pointing in a direction different from the direction of the arrowheads of the studs of the central region 3. For example, the first plurality of studs 9, the second plurality of studs 11, and the third plurality of studs 13 each have a body with identical construction.

In an embodiment (not shown), the third plurality of studs installed in the central region has a construction that is different from the studs installed in the first shoulder region and the second shoulder region. For example, the first plurality of studs and the second plurality of studs are axially asymmetric along their longitudinal direction whereas the third plurality of studs are axially symmetric along their longitudinal direction, or vice -versa.

In an embodiment (not shown), the tip end size of the third plurality of studs is smaller than the tip end size of the first and second plurality of studs, wherein the size of a tip end is defined by the maximum cross-section of said tip end. Having tip ends of the studs in the shoulders portions that are larger than the tip ends of the studs in the central region allows compensating for lower contact pressure. Since the effectiveness of the studs may depend on ice hardness and the capability of the tip end of the stud pin to penetrate the ice, larger tip ends may perform better than smaller tip ends in "warmer", relatively soft ice, such as -2°C to -5°C. Conversely, smaller tip ends may perform better than larger tip ends in "colder", relatively hard ice, such as -20°C to -30°C. Dual stud pin types/sizes of studs and tip ends in a single tread may thereby perform well in both of the soft ice and hard ice circumstances described above.

## Claims

1. A tire having a tread (1) which is divided in the tire width direction into a first shoulder region (5), a second shoulder region (7) and a central region (3) located between the first shoulder region (5) and the second shoulder region (7), the tire comprising a first plurality of studs (9) installed in the first shoulder region (5), a second plurality of studs (11) installed in the second shoulder region (7) and a third plurality of studs (13) installed in the central region (3), each of said studs (9, 11, 13) comprising a body (21) and a stud pin (19) with a pin end protruding out of the body (21), the body (21) being at least partially embedded in the tread (1) and the pin end having a pin end size, the pin end size being the cross-section area of said tip end when viewed in top view onto the tread (1), wherein
(i) at least a part of the third plurality of the studs (13) extends longitudinally into the tread (1) in a direction inclined relative to the normal of the radially outer surface of the tread (1) by a first angle (α) in the circumferential direction of the tire, and wherein at least a part of the first and/or second plurality of studs (9, 11) extends longitudinally into the tread (1) in a direction inclined relative to the normal of the radially outer surface of the tread (1) in a direction different from the direction of the third plurality of the studs (13); and/or
(ii) at least a part of the first plurality of studs (9) installed in the first shoulder region (5) and/or at least a part of the second plurality of studs (11) installed in the second shoulder (7) extends longitudinally into the tread in a direction inclined relative to the normal of the radially outer surface of the tread (1) by a second angle (β) in the tire width direction; and/or
(iii) at least a part of the third plurality of the studs (13) extends longitudinally into the tread (1) in a direction inclined relative to the normal of the radially outer surface of the tread (1) by a first angle (α) in the circumferential direction of the tire, and wherein the pin end size of the third plurality of studs (13) is smaller than the pin end size of the first and/or second plurality of studs (9, 11);
**characterized in that** the pin ends of the studs (9) of at least one of said regions (3, 5, 7) have an arrowhead shape or an elongated shape.

2. The tire of claim 1 wherein the tire has a directional tread pattern or shows a marking indicative of a designated direction of rotation of the tire.

3. The tire of at least one of the previous claims wherein the studs of the first plurality of studs (9) and the studs of the second plurality of studs (11) are inclined in the circumferential direction under an angle that is different from the angle (α) under which studs of the third plurality of studs (13) are inclined in the circumferential direction.

4. The tire of claim 2, wherein the studs of the first plurality of studs (9) and the studs of the second plurality of studs (11) are inclined in the circumferential direction under an angle that opens in a direction relative to the direction of rotation of the tire and that is different from the angle (α) under which studs of the third plurality of studs (13) are inclined in the circumferential direction.

5. The tire of at least one of the previous claims wherein the studs of the first plurality of studs (9) and the studs of the second plurality of studs (11) are inclined in the width direction of the tire and wherein the studs of the third plurality of studs (13) are inclined in the circumferential direction of the tire.

6. The tire of at least one of the previous claims wherein the first angle (α) or the second angle (β) or both independently range 5 to 40 degrees, alternatively from 10 to 40 degrees.

7. The tire of at least one of the previous claims wherein at least a part of the first plurality of studs (9) and/or at least a part of the second plurality of studs (11) extends longitudinally into the tread (1) in a direction inclined by the first angle (α) in the tire circumferential direction.

8. The tire of at least one of the previous claims wherein the pin ends of the studs (9, 11, 13) of the central region (3), the first shoulder region (5) and the second shoulder region (7) have an arrowhead shape, and further wherein at least a part of the arrowheads of the studs (9, 11) of the first shoulder region (5) or of the second shoulder region (7) or of both the first and the second shoulder region (5, 7) are pointing in a direction different from the direction in which the arrowheads of the studs (13) of the central region (3) point.

9. The tire of at least one of the previous claims wherein the pin ends of the studs (9, 11, 13) of the first shoulder region (5) and the second shoulder region (7) have an arrowhead shape, and further wherein at least a part of the arrowheads of the studs (9) of the first shoulder region (5) are pointing in a direction different from the direction in which the arrowheads of the studs (11) of the second shoulder region (7) point.

10. The tire of at least one of the previous claims wherein each of said studs (9, 11, 13) has a radially inner bottom portion (25, 37, 49) having a tear-drop shape comprising three planar sides and one semi-cylindrical side, or having a shape selected from a triangular shape, a quadrangular shape, a pentagonal shape, or a hexagonal shape.

11. The tire of at least one of the previous claims wherein the studs (13) of the third plurality of studs (13) have a first orientation, wherein the studs (11) of the first plurality of studs (9) have a second orientation rotated relative to the first orientation from +30° to +90° along their longitudinal direction, and wherein the studs (11) of the second plurality of studs (11) have a third orientation rotated relative to the first orientation from -30° to -90° along their longitudinal direction.

12. The tire of at least one of the previous claims wherein the studs (9) first plurality of studs (9), studs (11) of the second plurality of studs (11), and the studs (13) of the third plurality of studs (13) have a body (21) with identical construction.

13. The tire of at least one of the previous claims wherein at least one region selected from the central region (3), the first shoulder region (5) and the second shoulder region (7) comprises studs (9, 11, 13) having a pin end (19) having an arrowhead shape or an elongated shape and having and a body (21, 33, 45) with a bottom portion (25, 37, 49) of a tear-drop shape comprising three planar sides and one semi-cylindrical side or of a shape selected from a triangular shape, a quadrangular shape, a pentagonal shape, or a hexagonal shape.

## Patentansprüche

1. Reifen, der eine Lauffläche (1) hat, die in der Reifenbreitenrichtung in einen ersten Schulterbereich (5), einen zweiten Schulterbereich (7) und einen zwischen dem ersten Schulterbereich (5) und dem zweiten Schulterbereich (7) liegenden Mittelbereich (3) unterteilt ist, wobei der Reifen eine erste Mehrzahl von in dem ersten Schulterbereich (5) installierten Spikes (9), eine zweite Mehrzahl von in dem zweiten Schulterbereich (7) installierten Spikes (11) und eine dritte Mehrzahl von in dem Mittelbereich (3) installierten Spikes (13) umfasst, wobei jeder der oben genannten Spikes (9, 11, 13) einen Körper (21) und einen ein aus dem Körper (21) herausstehende Stiftende umfassende Spikestift (19) umfasst, wobei der Körper (21) zumindest teilweise in der Lauffläche (1) eingebettet ist, und wobei das Stiftende eine Stiftendgröße hat, wobei die Stiftendgröße in der Draufsicht auf die Lauffläche (1) die Querschnittsfläche des oben genannten Stiftendes ist; wobei
(i) mindestens ein Teil der dritten Mehrzahl der Spikes (13) in einer Richtung, die relativ zu der Normalen der radialen Außenfläche der Lauffläche (1) unter einen ersten Winkel (α) in Umfangsrichtung des Reifens geneigt ist, sich in Längsrichtung in die Lauffläche (1) hinein erstreckt, und wobei zumindest ein Teil der ersten und/oder der zweiten Mehrzahl von Spikes (9, 11) in einer Richtung, die relativ zu der Normalen der radial äußeren Oberfläche der Lauffläche (1) geneigt ist, in eine von der Richtung der dritten Mehrzahl der Spikes (13) abweichende Richtung, sich in Längsrichtung in die Lauffläche (1) hinein erstreckt; und/oder
(ii) mindestens ein Teil der ersten Mehrzahl von im ersten Schulterbereich (5) installierten Spikes (9) und/oder mindestens ein Teil der zweiten Mehrzahl von in der zweiten Schulter (7) installierten Spikes (11) in einer Richtung, die relativ zu der Normalen der radial äußeren Oberfläche der Lauffläche (1) unter einen zweiten Winkel (β) in Richtung der Reifenbreite geneigt ist, sich in Längsrichtung in die Lauffläche hinein erstreckt; und/oder
(iii) mindestens ein Teil der dritten Mehrzahl der Spikes (13) in einer Richtung, die relativ zu der Normalen der radialen Außenfläche der Lauffläche (1) um einen ersten Winkel (α) in Umfangsrichtung des Reifens geneigt ist, sich in Längsrichtung in die Lauffläche (1) hinein erstreckt, und wobei die Stiftendgröße der dritten Mehrzahl von Spikes (13) kleiner ist als die Stiftendgröße der ersten und/oder zweiten Mehrzahl von Spikes (9, 11); **dadurch gekennzeichnet, dass** die Stiftenden der Spikes (9) von wenigstens einem der oben genannten Bereiche (3, 5, 7) eine Pfeilspitzenform oder eine längliche Form haben.

2. Reifen nach Anspruch 1, wobei der Reifen ein gerichtetes Profilmuster oder eine Kennzeichnung einer bestimmten Drehrichtung des Reifens hat.

3. Reifen nach mindestens einem der vorhergehenden Ansprüche, wobei die Spikes der ersten Mehrzahl von Spikes (9) und die Spikes der zweiten Mehrzahl von Spikes (11) in Umfangsrichtung unter einem vom Winkel (a) abweichenden Winkel geneigt sind, unter dem Spikes der dritten Mehrzahl von Spikes (13) in Umfangsrichtung geneigt sind.

4. Reifen nach Anspruch 2, wobei die Spikes der ersten Mehrzahl von Spikes (9) und die Spikes der zweiten Mehrzahl von Spikes (11) in Umfangsrichtung unter einem Winkel geneigt sind, der sich in einer Richtung relativ zu der Drehrichtung des Reifens öffnet und der sich von dem Winkel (α) unterscheidet, unter dem Spikes der dritten Mehrzahl von Spikes (13) in Umfangsrichtung geneigt sind.

5. Reifen nach mindestens einem der vorhergehenden Ansprüche, wobei die Spikes der ersten Mehrzahl von Spikes (9) und die Spikes der zweiten Mehrzahl von Spikes (11) in Breitenrichtung des Reifens geneigt sind, und wobei die Spikes der dritten Mehrzahl von Spikes (13) in Umfangsrichtung des Reifens geneigt sind.

6. Reifen nach mindestens einem der vorhergehenden Ansprüche, wobei der erste Winkel (α) oder der zweite Winkel (β) oder beide unabhängig voneinander von 5 bis 40 Grad, alternativ von 10 bis 40 Grad, reichen.

7. Reifen nach mindestens einem der vorhergehenden Ansprüche, wobei mindestens ein Teil der ersten Mehrzahl von Spikes (9) und/oder mindestens ein Teil der zweiten Mehrzahl von Spikes (11) sich in einer unter dem in Umfangsrichtung des Reifens ersten Winkel (α) geneigten Richtung in Längsrichtung in die Lauffläche (1) hinein erstreckt.

8. Reifen nach mindestens einem der vorhergehenden Ansprüche, wobei die Stiftenden der Spikes (9, 11, 13) des Mittelbereichs (3), des ersten Schulterbereichs (5) und des zweiten Schulterbereichs (7) eine Pfeilspitzenform haben, und ferner, wobei zumindest ein Teil der Pfeilspitzen der Spikes (9, 11) des ersten Schulterbereichs (5) oder des zweiten Schulterbereichs (7) oder sowohl des ersten als auch des zweiten Schulterbereichs (5, 7) in eine Richtung weisen, die von der Richtung abweicht, in die die Pfeilspitzen der Spikes (13) des zentralen Bereichs (3) weisen.

9. Reifen nach mindestens einem der vorhergehenden Ansprüche, wobei die Stiftenden der Spikes (9, 11, 13) des ersten Schulterbereichs (5) und des zweiten Schulterbereichs (7) eine Pfeilspitzenform haben, und ferner, wobei zumindest ein Teil der Pfeilspitzen der Spikes (9) des ersten Schulterbereichs (5) in eine Richtung weisen, die sich von den Pfeilspitzen der Spikes (11) des zweiten Schulterbereichs (7) unterscheidet.

10. Reifen nach mindestens einem der vorhergehenden Ansprüche, wobei jeder der oben genannten Spikes (9, 11, 13) einen radial inneren Unterteil (25, 37, 49) hat, der eine Tropfenform hat, die drei planare Seiten und eine halbzylindrische Seite umfasst, oder der eine Form hat, die aus einer dreieckigen Form, einer viereckigen Form, einer fünfeckigen Form oder einer sechseckigen Form ausgewählt ist.

11. Reifen nach mindestens einem der vorhergehenden Ansprüche, wobei die Spikes (13) der dritten Mehrzahl von Spikes (13) eine erste Orientierung haben, wobei die Spikes (11) der ersten Mehrzahl von Spikes (9) eine zweite Orientierung haben, die relativ zu der ersten Orientierung von +30° bis +90° entlang ihrer Längsrichtung gedreht ist, und wobei die Spikes (11) der zweiten Mehrzahl von Spikes (11) eine dritte Orientierung haben, die relativ zu der ersten Orientierung von - 30° bis -90° entlang ihrer Längsrichtung gedreht ist.

12. Reifen nach mindestens einem der vorhergehenden Ansprüche, wobei die Spikes (9) der ersten Mehrzahl von Spikes (9), die Spikes (11) der zweiten Mehrzahl von Spikes (11) und die Spikes (13) der dritten Mehrzahl von Spikes (13) einen Körper (21) haben, der identisch ausgebildet ist.

13. Reifen nach mindestens einem der vorhergehenden Ansprüche, wobei mindestens ein aus dem zentralen Bereich (3), dem ersten Schulterbereich (5) und dem zweiten Schulterbereich (7) ausgewählter Bereich Spikes (9, 11, 13) umfasst, die ein Stiftende (19) haben, das eine Pfeilspitzenform oder eine längliche Form hat, und einen Körper (21, 33, 45) hat, der ein Unterteil (25, 37, 49) mit einer drei ebene Seiten und eine halbzylindrische Seite umfassende Tropfenform oder mit einer aus einer dreieckigen Form, einer viereckigen Form, einer fünfeckigen Form oder einer sechseckigen Form ausgewählten Form umfasst.

## Revendications

1. Bandage pneumatique possédant une bande de roulement (1) qui est subdivisée, dans la direction de la largeur du bandage pneumatique, en une première zone (5) faisant office d'épaulement, une deuxième zone (7) faisant office d'épaulement et une zone centrale (3) disposée entre la première zone (5) faisant office d'épaulement et la deuxième zone (7) faisant office d'épaulement, le bandage pneumatique comprenant une première quantité de crampons (9) montée dans la première zone (5) faisant office d'épaulement, une deuxième quantité de crampons (11) montée dans la deuxième zone (7) faisant office d'épaulement et une troisième quantité de crampons (13) montée dans la zone centrale (3), chacun desdits crampons (9, 11, 13) comprenant un corps (21) et une tige de crampon (19) comprenant une extrémité de tige faisant saillie à l'extérieur du corps (21), le corps (21) étant au moins en partie incorporé dans la bande de roulement (1) et l'extrémité de tige possédant une dimension d'extrémité de tige, la dimension de l'extrémité de tige représentant l'aire de section transversale de ladite extrémité de tige lorsqu'on regarde la bande de roulement (1) dans une vue de sommet ; dans lequel
(i) au moins une partie de la troisième quantité de crampons (13) s'étend, dans la direction longitudinale, jusque dans la bande de roulement (1) dans une direction inclinée par rapport à la normale de la surface externe, dans la direction radiale, de la bande de roulement (1) en formant un premier angle (α) dans la direction circonférentielle du bandage pneumatique ; et dans lequel au moins une partie de la première et/ou de la deuxième quantité de crampons (9, 11) s'étend, dans la direction longitudinale, jusque dans la bande de roulement (1) dans une direction inclinée par rapport à la normale de la surface externe, dans la direction radiale, de la bande de roulement (1) dans une direction différente de la direction de la troisième quantité de crampons (13) ; et/ou
(ii) au moins une partie de la première quantité de crampons (9) montée dans la première zone (5) faisant office de bande de roulement et/ou au moins une partie de la deuxième quantité de crampons (11) montée dans la deuxième zone (7) faisant office de bande de roulement s'étend, dans la direction longitudinale, jusque dans la bande de roulement dans une direction inclinée par rapport à la normale de la surface externe, dans la direction radiale, de la bande de roulement (1), en formant un deuxième angle (β) dans la direction de la largeur du bandage pneumatique ; et/ou
(iii) au moins une partie de la troisième quantité de crampons (13) s'étend, dans la direction longitudinale, jusque dans la bande de roulement (1) dans une direction inclinée par rapport à la normale de la surface externe, dans la direction radiale, de la bande de roulement (1) en formant un premier angle (α) dans la direction circonférentielle du bandage pneumatique ; et dans lequel la dimension de l'extrémité de tige de la troisième quantité de crampons (13) est inférieure à la dimension de l'extrémité de tige de la première et/ou de la deuxième quantité de crampons (9, 11) ;
**caractérisé en ce que** les extrémités de tiges des crampons (9) d'au moins une desdites zones (3, 5, 7) possèdent une configuration en forme de pointe de flèche ou une configuration de forme allongée.

2. Bandage pneumatique selon la revendication 1, dans lequel le bandage pneumatique possède une sculpture directionnelle de bande de roulement ou présente un repère qui témoigne d'une direction de rotation désignée du bandage pneumatique.

3. Bandage pneumatique selon au moins une des revendications précédentes, dans lequel les crampons de la première quantité de crampons enveloppent (9) et les crampons de la deuxième quantité de crampons (11) sont inclinés dans la direction circonférentielle en formant un angle qui est différent de l'angle (α) formée par l'inclinaison des crampons de la troisième quantité de crampons (13) dans la direction circonférentielle.

4. Bandage pneumatique selon au moins une des revendications précédentes, dans lequel les crampons de la première quantité de crampons enveloppent (9) et les crampons de la deuxième quantité de crampons (11) sont inclinés dans la direction circonférentielle en formant un angle qui s'ouvre dans une direction par rapport à la direction de rotation du bandage pneumatique et qui est différent de l'angle (α) formé par l'inclinaison des crampons de la troisième quantité de crampons (13) dans la direction circonférentielle.

5. Bandage pneumatique selon au moins une des revendications précédentes, dans lequel les crampons de la première quantité de crampons (9) et les crampons de la deuxième quantité de crampons (11) sont inclinés dans la direction en largeur du bandage pneumatique ; et dans lequel la troisième quantité de crampons (13) est inclinée dans la direction circonférentielle du bandage pneumatique.

6. Bandage pneumatique selon au moins une des revendications précédentes, dans lequel le premier angle (α) ou le deuxième angle (β) ou les deux de manière indépendante se situe(nt) dans la plage de 5 à 40 degrés, en variante de 10 à 40 degrés.

7. Bandage pneumatique selon au moins une des revendications précédentes, dans lequel au moins une partie de la première quantité de crampons (9) et/ou au moins une partie de la deuxième quantité de crampons (11) s'étendent, dans la direction longitudinale, jusque dans la bande de roulement (1), dans une direction inclinée en formant le premier angle (α) dans la direction circonférentielle du bandage pneumatique.

8. Bandage pneumatique selon au moins une des revendications précédentes, dans lequel les extrémités de tiges des crampons (9, 11, 13) de la zone centrale (3), de la première zone (5) faisant office d'épaulement et de la deuxième zone (7) faisant office d'épaulement possèdent une configuration en forme de pointe de flèche ; et en outre dans lequel au moins une partie des pointes de flèches des crampons (9, 11) de la première zone (5) faisant office d'épaulement ou de la deuxième zone (7) faisant office d'épaulement ou à la fois de la première et de la deuxième zone (5, 7) faisant office d'épaulement pointent dans une direction qui diffère de la direction dans laquelle pointent les pointes de flèches des crampons (13) de la zone centrale (3).

9. Bandage pneumatique selon au moins une des revendications précédentes, dans lequel les extrémités de tiges des crampons (9, 11, 13) de la première zone (5) faisant office d'épaulement et de la deuxième zone (7) faisant office d'épaulement possèdent une configuration en forme de pointe de flèche ; et en outre dans lequel au moins une partie des pointes de flèches des crampons (9) de la première zone (5) faisant office d'épaulement pointent dans une direction qui diffère de la direction dans laquelle pointent les pointes de flèches des crampons (11) de la deuxième zone (7) faisant office d'épaulement.

10. Bandage pneumatique selon au moins une des revendications précédentes, dans lequel chacun desdits crampons (9, 11, 13) possède une portion inférieure (25, 37, 49), interne dans la direction radiale, qui possède une configuration en forme de goutte d'eau qui comprend trois côtés plats et un côté semi-cylindrique, ou qui possède une configuration choisie parmi une configuration de forme triangulaire, une configuration de forme quadrangulaire, une configuration de forme pentagonale ou une configuration de forme hexagonale.

11. Bandage pneumatique selon au moins une des revendications précédentes, dans lequel les crampons (13) de la troisième quantité de crampons (13) possèdent une première orientation ; dans lequel les crampons (9) de la première quantité de crampons (9) possèdent une deuxième orientation ayant effectué une rotation par rapport à la première orientation de l'ordre de +30° à +90° dans leur direction longitudinale; et dans lequel les crampons (11) de la deuxième quantité de crampons (11) possèdent une troisième orientation ayant effectué une rotation par rapport à la première orientation de l'ordre de -30° à -90° dans leur direction longitudinale.

12. Bandage pneumatique selon au moins une des revendications précédentes, dans lequel les crampons (9) de la première quantité de crampons (9), les crampons (11) de la deuxième quantité de crampons (11) et les crampons (13) de la troisième quantité de crampons (13) possèdent un corps (21) conçu de manière identique.

13. Bandage pneumatique selon au moins une des revendications précédentes, dans lequel au moins une zone choisie parmi la zone centrale (3), la première zone (5) faisant office d'épaulement et la deuxième zone (7) faisant office d'épaulement comprend des crampons (9, 11, 13) qui possèdent une extrémité de tige (19) possédant une configuration en forme de pointe de flèche ou une configuration de forme allongée, et qui possèdent un corps (21, 33, 45) qui comprend une portion inférieure (25, 37, 49) d'une configuration en forme de goutte d'eau qui comprend trois côtés plats et un côté semi-cylindrique ou d'une configuration qui est choisie parmi une configuration de forme triangulaire, une configuration de forme quadrangulaire, une configuration de forme pentagonale ou une configuration de forme hexagonale.
